(19) Europäisches Patentamt
European Patent Office
Office européen des brevets

(11) EP 3 406 644 A1

(12) # EUROPÄISCHE PATENTANMELDUNG

(43) Veröffentlichungstag:
**28.11.2018 Patentblatt 2018/48**

(21) Anmeldenummer: **17172551.8**

(22) Anmeldetag: **23.05.2017**

(51) Int Cl.:
*C08G 18/75 (2006.01)*
*C08G 18/12 (2006.01)*
*C08G 18/28 (2006.01)*
*C08G 18/42 (2006.01)*
*C08G 18/44 (2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **SIKA TECHNOLOGY AG**
**6340 Baar (CH)**

(72) Erfinder:
- **Corsaro, Antonio**
  **8105 Regensdorf (CH)**
- **Fässler, Reto**
  **8048 Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **LÖSUNGSMITTELBASIERTER PRIMER MIT LANGER OFFENZEIT UND VERBESSERTER AHÄSION**

(57) Die vorliegende Erfindung betrifft Haftvermittlerzusammensetzungen, enthaltend:
a) zwischen 40 und 80 Gewichtsteile einer Bindemittelzusammensetzung, umfassend i) 20 bis 40 Gew.-% mindestens eines silanterminierten Polyurethanpolymers **STP,** erhältlich aus mindestens einem Polyol **P,** mindestens einem aliphatischen Polyisocyanat **I** und mindestens einem Organosilan **OS1,** ii) 4 bis 20 Gew.-% mindestens eines Organosilans **OS2** und/oder Organotitanats **OT,** iii) 0 bis 3 Gew.-% mindestens eines Trocknungsmittels, iv) 40 bis 80 Gew.-% eines Lösungsmittels **L1;**
b) zwischen 0 und 30 Gewichtsteile Industrieruss;
c) zwischen 0 und 1 Gewichtsteile UV-Marker;
d) so viel eines Lösungsmittels **L2,** dass die Summe a) bis d) 100 Gewichtsteile ergibt; wobei das Organosilan **OS1** eine sekundäre Aminogruppe, eine Mercaptogruppe oder eine Hydroxylgruppe am organischen Rest aufweist und bevorzugt zwei Silangruppen aufweist, und das mindestens eine silanterminierte Polyurethanpolymer **STP** hergestellt wurde in Abwesenheit des Organosilans **OS2,** und das mindestens eine Polyol **P** eine mittlere OH-Funktionalität von mindestens 2 und ein Äquivalenzgewicht von höchstens 500 aufweist.

Die erfindungsgemässen Haftvermittlerzusammensetzungen besitzen eine lange Offenzeit und ermöglichen nach der Anwendung eine hohe UV-Stabilität der Verklebung. Weiterhin ermöglichen erfindungsgemässe Haftvermittlerzusammensetzungen eine stabile Verklebung auch unter sehr anspruchsvollen Umweltbedingungen, wie beispielsweise unter nassen, feuchtwarmen oder heissen Bedingungen.

EP 3 406 644 A1

## Beschreibung

### Technisches Gebiet

Die Erfindung betrifft das Gebiet der lösungsmittelbasierten Haftvermittlerzusammensetzungen.

### Stand der Technik

Lösungsmittelbasierte Haftvermittlerzusammensetzungen, insbesondere als Primer oder Haftvermittlervoranstriche, werden seit langem benutzt, um die Haftung von Klebstoffen, Dichtstoffen, Beschichtungen und Belägen auf dem Untergrund zu verbessern. Solche Haftvermittlerzusammensetzungen ermöglichen eine gute Verklebung oder Beschichtung von Substraten, ohne dass diese auf andere Weise, wie zum Beispiel mechanische Vorbehandlung oder sonstige aufwändige Verfahren, weiter vorbehandelt werden müssen. Das schnelle Verdunsten der Lösungsmittel ermöglicht weiterhin rasche Arbeitsund Zykluszeiten bei Verklebungen im Bau oder in der Industrie oder kurze Wegfahrzeiten bei Automobilscheibenreparaturen. Typischerweise werden diesen Haftvermittlerzusammensetzungen Organosilane zugemischt, welche eine für die Verklebung von anorganischen Materialien wie Gläsern oder Keramiken und anderen Substraten mit Kleb- und Dichtstoffen geeignete Oberflächenmodifikation ermöglichen. Leider führen diese sonst sehr geeigneten Organosilane in Haftvermittlerzusammensetzungen zu Problemen, da sie häufig durch ihre hohe Reaktivität untereinander nach kurzer Zeit und besonders unter warmen Lagerbedingungen kondensieren und zu Inhomogenitäten und Ausfällungen in den Haftvermittlerzusammensetzungen führen. Diesem Problem hat man zu begegnen versucht, indem zwei- oder mehrkomponentige Zusammensetzungen formuliert wurden, die erst kurz vor der Anwendung gemischt werden. So konnte zwar die Lagerstabilität durch Trennung der einzelnen Organosilane erhöht werden, allerdings zum Preis eines zusätzlichen, fehleranfälligen Arbeitsschrittes.

Zu alledem zeigen auch etwas lagerstabilere einkomponentige oder zur Anwendung gemischte mehrkomponentige Zusammensetzungen mit hohen Organosilangehalten die Tendenz, dass ihre Offenzeit sehr kurz ist, da die Silane unter Einfluss von Luftfeuchtigkeit sehr rasch hydrolisieren und kondensieren. Dies ist gerade bei zeitlich aufwändigeren Arbeiten unerwünscht.

Herkömmliche lösungsmittelbasierende Haftvermittler sind darüber hinaus oft bezüglich UV-Stabilität mangelhaft, was dazu führt, dass die Verklebung unter längerem UV-Licht instabil wird, was besonders bei Automobilglasscheiben zu Problemen führen kann

### Darstellung der Erfindung

Aufgabe der vorliegenden Erfindung ist es daher, eine einkomponentige, lösungsmittelbasierte Haftvermittlerzusammensetzung bereitzustellen, welche neben hervorragenden Haftvermittlereigenschaften eine sehr gute Lagerstabilität besitzt, eine lange Offenzeit aufweist, sowie nach der Anwendung eine hohe UV-Stabilität der Verklebung ermöglicht. Weiterhin war Aufgabe der vorliegenden Erfindung, eine Haftvermittlerzusammensetzung bereitzustellen, die eine über lange Zeit stabile Verklebung auch unter sehr anspruchsvollen Umweltbedingungen sicherstellt, wie beispielsweise unter nassen, feuchtwarmen oder heissen Bedingungen.

Es hat sich überraschenderweise gezeigt, dass eine Haftvermittlerzusammensetzung gemäss Anspruch 1 diese Aufgaben erfüllen kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Haftvermittlerzusammensetzung enthaltend

a) zwischen 40 und 80 Gewichtsteile einer Bindemittelzusammensetzung, umfassend

i) 20 bis 40 Gew.-%, bezogen auf die Bindemittelzusammensetzung, mindestens eines silanterminierten Polyurethanpolymers **STP,** erhältlich aus mindestens einem Polyol **P,** mindestens einem aliphatischen Polyisocyanat **I** und mindestens einem Organosilan **OS1** bevorzugt in Gegenwart eines Katalysators **K,**
ii) 4 bis 20 Gew.-%, bezogen auf die Bindemittelzusammensetzung, mindestens eines Organosilans **OS2** und/oder Organotitanats **OT,**
iii) 0 bis 3 Gew.-%, bezogen auf die Bindemittelzusammensetzung, mindestens eines Trocknungsmittels,
iv) 40 bis 80 Gew.-%, bezogen auf die Bindemittelzusammensetzung, eines Lösungsmittels **L1;**

b) zwischen 0 und 30 Gewichtsteile Industrieruss;
c) zwischen 0 und 1 Gewichtsteile UV-Marker;
d) soviel eines Lösungsmittels **L2,** dass die Summe a) bis d) 100 Gewichtsteile ergibt;

wobei
das Organosilan **OS1** eine sekundäre Aminogruppe, eine Mercaptogruppe oder eine Hydroxylgruppe am organischen Rest aufweist und bevorzugt zwei Silangruppen aufweist, und
das mindestens eine silanterminierte Polyurethanpolymer **STP** hergestellt wurde in Abwesenheit des Organosilans **OS2,** und das mindestens eine Polyol **P** eine mittlere OH-Funktionalität von mindestens 2 und ein Äquivalenzgewicht von höchstens 500 aufweist.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind. Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnet der Term "Silan" Verbindungen, welche einerseits mindestens eine, üblicherweise zwei, drei oder vier über Si-O-Bindungen direkt an das Siliciumatom gebundene Alkoxygruppen oder Acyloxygruppen aufweisen. Der Term "Organosilan" bezeichnet Silane, welche zudem mindestens einen, manchmal auch zwei oder drei über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar, jedoch gehören sie zu den Silanen. Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Alkoxy- oder Acyloxysilangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.
Silangruppen-haltige Polymere sind dabei insbesondere Silangruppen-haltige organische Polymere, welche üblicherweise und insbesondere in diesem Dokument gleichbedeutend auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Dialkylzinn(IV)-carboxylaten, katalysiert.
Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.
Als "Aminosilane", "Hydroxysilane", bzw. "Mercaptosilane" werden Organosilane bezeichnet, deren organischer Rest eine Aminogruppe, Hydroxylgruppe, bzw. eine Mercaptogruppe aufweist. Als "primäre Aminosilane" werden Aminosilane bezeichnet, welche eine primäre Aminogruppe aufweisen, also eine $NH_2$-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Zur Abschätzung der Lagerstabilität kann eine Lagerung unter erhöhten Temperaturen durchgeführt werden, was eine zeitlich längere Lagerung unter tieferen Temperaturen, wie Raumtemperatur, simuliert.

Als "Raumtemperatur" wird eine Temperatur von ca. 23 °C bezeichnet.
Alle im Dokument erwähnten Industriestandards und Normen beziehen sich auf die zum Zeitpunkt der Einreichung der Erstanmeldung gültigen Fassung. Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mn einer oligomeren oder polymeren Mischung von Molekülen oder Resten bezeichnet, welches üblicherweise mittels Gelpermeationschromatographie (GPC) gegen Polystyrol als Standard bestimmt wird.

Ein erster wesentlicher Bestandteil der erfindungsgemässen Haftvermittlerzusammensetzung sind zwischen 40 und 80 Gewichtsteile einer Bindemittelzusammensetzung, umfassend

i) 20 bis 40 Gew.-%, bezogen auf die Bindemittelzusammensetzung, mindestens eines silanterminierten Polyurethanpolymers **STP,** erhältlich aus mindestens einem Polyol **P,** mindestens einem aliphatischen Polyisocyanat **I** und mindestens einem Organosilan **OS1** bevorzugt in Gegenwart eines Katalysators **K,**
ii) 4 bis 20 Gew.-%, bezogen auf die Bindemittelzusammensetzung, mindestens eines Organosilans **OS2** und/oder Organotitanats **OT,**
iii) 0 bis 3 Gew.-%, bezogen auf die Bindemittelzusammensetzung, mindestens eines Trocknungsmittels,
iv) 40 bis 80 Gew.-%, bezogen auf die Bindemittelzusammensetzung, eines Lösungsmittels **L1.**

Das obengenannte silanterminierte Polyurethanpolymer **STP** ist ein silanfunktionelles Polyurethanpolymer, welches erhältlich ist durch die Umsetzung eines Organosilans **OS1,** welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer gänzlich frei von Isocyanatgruppen ist.

Als Isocyanatgruppen aufweisendes Polyurethanpolymer zur Herstellung eines silanterminierten Polyurethanpolymers **STP** eignen sich beispielsweise Polymere, welche erhältlich sind durch die Umsetzung von mindestens einem Polyol **P** mit mindestens einem Polyisocyanat **I**, insbesondere einem Diisocyanat. Diese Umsetzung kann dadurch erfolgen, dass das Polyol **P** und das Polyisocyanat **I** mit üblichen Verfahren, beispielsweise bei Temperaturen von 50 °C bis 100 °C, bevorzugt unter Mitverwendung geeigneter Katalysatoren **K,** zur Reaktion gebracht werden, wobei das Polyisocyanat **I** so dosiert ist, dass dessen Isocyanatgruppen im Verhältnis zu den Hydroxylgruppen des Polyols **P** im stöchiometrischen Überschuss vorhanden sind.
Insbesondere wird der Überschuss an Polyisocyanat **I** so gewählt, dass im resultierenden Polyurethanpolymer nach der Umsetzung aller Hydroxylgruppen des Polyols ein Gehalt an freien Isocyanatgruppen von 1 bis 20 Gew.-%, bevorzugt 5 bis 15 Gew.-%, besonders bevorzugt 5.25 bis 12 Gew.-%, bezogen auf das gesamte Polymer, verbleibt.
Bevorzugt wird das Polyurethanpolymer unter Mitverwendung von Lösungsmittel **L1** hergestellt, wobei das Lösungsmittel **L1** keine gegenüber Isocyanaten reaktive Gruppen enthalten darf.
Bevorzugt sind Polyurethanpolymere mit dem genannten Gehalt an freien Isocyanatgruppen, welche aus der Umsetzung von Polyisocyanat **I** mit Polyol P in einem NCO:OH-Verhältnis (molares Verhältnis der NCO-Gruppen von Polyisocyanat **I** zu den OH-Gruppen von Polyol **P)** von 1.5:1 bis 2.5:1 erhalten werden.

In der Umsetzung des Organosilans **OS1,** welches mindestens eine gegenüber Isocyanatgruppen reaktive Gruppe aufweist, mit einem Polyurethanpolymer, welches Isocyanatgruppen aufweist, kann das Organosilan **OS1** prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Geeignete Polyole **P** für die Herstellung des Polyurethanpolymers und danach des silanterminierten Polyurethanpolymers **STP** sind insbesondere Polyetherpolyole, Poly(methy)acrylatpolyole, Polyesterpolyole und Polycarbonatpolyole sowie Mischungen dieser Polyole. Es ist jedoch für die Erfindung wesentlich, dass das mindestens eine verwendete Polyol **P** eine mittlere OH-Funktionalität von mindestens 2 und ein Äquivalenzgewicht von höchstens 500 aufweist. Unter OH-Funktionalität eines Polyols wird hier die mittlere (durchschnittliche) Anzahl von OH-Gruppen pro Polyolmolekül verstanden. Das Äquivalenzgewicht wird nach Formeln (I) und (II) definiert,

$$\text{Äquivalenzgewicht} = (56.1 \times 1000) / \text{OH-Zahl} \qquad \text{(I)}$$

$$\text{Äquivalenzgewicht} = M_n / \text{OH-Funktionalität} \qquad (II)$$

wobei die OH-Zahl (Hydroxylzahl) definiert ist als die Menge Kaliumhydroxid in Milligramm, welche der bei der Acetylierung von einem Gramm Polyol gebundenen Menge Essigsäure gleichwertig ist, und
$M_n$ das mittlere Molekulargewicht (Zahlenmittel) des Polyols ist. Beide Formeln (I) und (II) erlauben die Berechnung des Äquivalenzgewichtes. Die benötigten Werte zur Berechnung sind experimentell zugänglich ($M_n$, OH-Zahl) oder werden vom Hersteller der Polyole bekannt gegeben ($M_n$, OH-Funktionalität).

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole und -triole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, Glycerin, 1,6-Hexandiol, Dimerfettsäurediol und 1,4-Cyclohexandimethanol als zweiwertigem und/oder dreiwertigem Alkohol.
Beispielsweise geeignete Polyesterpolyole sind Capa® Polyole von der Firma Perstorp, insbesondere Capa® 3031 und Capa® 4101, sowie Baycoll® Polyole von der Firma Covestro, insbesondere Baycoll® 670. Es ist jedoch darauf zu achten, dass die Polyesterpolyole die obengenannten Bediungungen bezüglich OH-Funktionalität und Äquivalenzgewicht erfüllen, was nicht notwendigerweise für die gesamte Produktepalette der genannten Hersteller gilt.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate die aus der Copolymerisation von $CO_2$ mit Epoxiden, wie Ethylenoxid und Propylenxid, zugänglich sind. Besonders geeignet sind Polycarbonatdiole, insbesondere amorphe Polycarbonatdiole. Beispielsweise geeignete Polycarbonatpolyole sind Kuraray® Polyole von der Firma Kuraray, insbesondere Kuraray® C590, sowie Desmophen® Polyole von der Firma Covestro, insbesondere Desmophen® C1100. Es ist jedoch darauf zu achten, dass die Polycarbonatpolyole die obengenannten Bediungungen bezüglich OH-Funktionalität und Äquivalenzgewicht erfüllen, was nicht notwendigerweise für

die gesamte Produktepalette der genannten Hersteller gilt.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

Alle genannten Polyole weisen bevorzugt ein mittleres Molekulargewicht von 200 bis 5'000 g/mol, insbesondere von 250 bis 2'500 g/mol, bevorzugt von 300 bis 2'000 g/mol und bevorzugt eine mittlere OH-Funktionalität im Bereich von 2 bis 4 auf.

Besonders geeignete Polyole sind Polyesterpolyole, Polycarbonatpolyole und Poly(meth)acrylatpolyole. Diese Polyole ermöglichen eine besonders gute Haftvermittlerwirkung.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate **I** für die Herstellung des Polyurethanpolymers können handelsübliche aliphatische Polyisocyanate, insbesondere Diisocyanate, verwendet werden. Aromatische Polyisocyanate sind nicht geeignet, weil sie im Vergleich zu aliphatischen Polyisocyanaten eine ungenügende UV-Stabilität der Zusammensetzung nach Anwendung verleihen.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, Oligomere und Polymere der vorgenannten Isocyanate, sowie beliebige Mischungen der vorgenannten Isocyanate.

Am meisten bevorzugt ist 1-Isocyanato-3,3,5-trimethyl-5-isocyanatomethylcyclohexan (= Isophorondiisocyanat oder IPDI).

Das Organosilan **OS1,** welches mindestens eine gegenüber Isocyanatgruppen reaktive Gruppe aufweist, ist beispielsweise ein Hydroxysilan, ein Mercaptosilan oder ein Aminosilan, insbesondere ein Hydroxysilan oder ein Aminosilan.

Das Organosilan OS1 ist ein einer ersten bevorzugten Ausführungsform ein Aminosilan. Bevorzugt ist das Aminosilan ein Aminosilan AS der Formel (III),

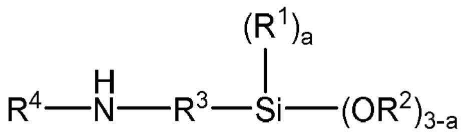 (III)

Dabei steht der Rest $R^1$ für eine Alkylgruppe mit 1 bis 8 C-Atomen, insbesondere für eine Methyl- oder für eine Ethylgruppe. Der Rest $R^2$ steht für eine Alkylgruppe mit 1 bis 12 C-Atomen, insbesondere für eine Alkylgruppe mit 2 bis 8 C-Atomen, bevorzugt für eine Methyl-, Ethyl- oder für eine Isopropylgruppe, am meisten bevorzugt für eine Methyl- oder Ethylgruppe. Der Rest $R^3$ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoff- und/oder Sauerstoffatomen. Der Index a steht für einen Wert von 0 oder 1 oder 2, insbesondere für einen Wert von 0.

Meist bevorzugt handelt es sich beim Rest $R^2$ um eine Methyl- oder Ethylgruppe, das heisst also, dass in der erfindungsgemässen Zusammensetzung wie sie vorhergehend beschrieben worden ist, die Alkoxy-Endgruppen des silanfunktionellen Polymers P Methoxy- oder Ethoxygruppen sind.

Der Vorteil von silanfunktionellen Polymeren, welche als Alkoxy-Endgruppen Ethoxygruppen aufweisen ist, dass bei der Vernetzung mit Wasser Ethanol freigesetzt wird, wodurch die Zusammensetzungen aus ökologischer und toxikologischer Sicht unbedenklich sind.

Der Vorteil von silanfunktionellen Polymeren, welche als Alkoxy-Endgruppen Methoxygruppen aufweisen ist, dass bei der Vernetzung mit Wasser besonders reaktiv sind und auf toxikologisch bedenkliche Vernetzungskatalysatoren wie beispielsweise Zinnkatalysatoren verzichtet werden kann.

Innerhalb einer Silangruppe der Formel (III) stehen $R^1$ und $R^2$ jeweils unabhängig voneinander für die beschriebenen Reste. So sind beispielsweise auch Verbindungen der Formel (III) möglich, welche Diethoxy-methoxysilane ($R^2$ = Ethyl, $R^2$ = Ethyl, $R^2$ = Methyl) darstellen.

$R^4$ steht für einen linearen oder verzweigten, einwertigen Kohlenwasserstoffrest mit 1 bis 20 C-Atomen, welcher gegebenenfalls cyclische Anteile aufweist, oder für einen Rest der Formel (IV) steht.

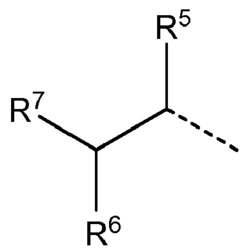 (IV)

Dabei stehen die Reste $R^5$ und $R^6$ jeweils unabhängig voneinander für ein Wasserstoffatom oder für einen Rest aus der Gruppe bestehend aus $-R^8$ $-COOR^8$ und -CN.

Der Rest $R^7$ steht für ein Wasserstoffatom oder für einen Rest aus der Gruppe bestehend aus $-CH_2-COOR^8$, $-COOR^8$, $-CONHR^8$, $-CON(R^8)_2$, -CN, $-NO_2$, $-PO(OR^8)_2$, $-SO_2R^8$ und $-SO_2OR^8$.

Der Rest $R^8$ steht für einen, gegebenenfalls mindestens ein Heteroatom aufweisenden, Kohlenwasserstoffrest mit 1 bis 20 C-Atomen.

Beispiele für geeignete Aminosilane **AS** sind sekundäre Aminosilane wie N-Butyl-3-aminopropyltrimethoxysilan, N-Butyl-3-aminopropyltriethoxysilan, N-Phenyl-3-aminopropyltrimethoxysilan und N-Phenyl-3-aminopropyltriethoxysilan; die Produkte aus der Michael-artigen Addition von primären Aminosilanen wie 3-Aminopropyltrimethoxysilan oder 3-Aminopropyldiethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Trimethoxysilylpropyl)-amino-bernsteinsäuredimethyl- und -diethylester; sowie Analoga der genannten Aminosilane mit Isopropoxy-, n-Propoxy- sowie entsprechenden Butoxy-, Pentoxy- Hexoxy- Heptoxy- und Octoxygruppen anstelle der Methoxyoder Ethoxygruppen am Silicium. Als Aminosilane **AS** besonders geeignet sind sekundäre Aminosilane, insbesondere Aminosilane **AS** der Formel (III). Bevorzugt sind die Michael-artigen Addukte, insbesondere N-(3-Trimethoxysilyl-propyl)-amino-bernsteinsäurediethylester und N-(3-Triethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen ($NH_2$-Gruppen) in einer der Michael-Addition analogen Weise nucleophile Additionsreaktionen einzugehen (Hetero-Michael-Addition).

Als Aminosilane, eignen sich weiterhin insbesondere auch solche, wie sie erhältlich sind aus der Reaktion eines N-Aminoethyl-aminoalkyltrialkoxysilans, mit einem Malein- oder Fumarsäurediester. Derartige geeignete Aminosilane sind beispielsweise beschrieben in WO 01/00632. Mit entsprechenden Aminosilanen hergestellte silanterminierte Polyurethanpolymere sind beispielsweise beschrieben in der europäischen Patentanmeldung mit der Anmeldenummer EP09153120.2.

Als Hydroxysilane für die Herstellung von Polymeren **STP** eignen sich beispielsweise solche, wie sie in der EP2805985 (insbesondere S. 2, Z. 51 bis S. 3, Z. 28) und der WO 2013/174891 (insbesondere S. 6, Z. 11 bis S. 8, Z. 5) und der WO 2013/174892 (insbesondere S. 6, Z. 6 bis S. 7, Z. 6) beschreiben sind, deren genannte Offenbarung hiermit durch Bezugnahme eingeschlossen ist.

Als Mercaptosilane für die Herstellung von Polymeren **STP** eignen sich beispielsweise 3-Mercaptopropyltrimethoxysilane, 3-Mercaptopropylmethyldimethoxysilane, 3-Mercaptopropyltriethoxysilane und 3-Mercaptopropylmethyldiethoxysilane.

Bevorzugt handelt es sich beim Organosilan **OS1** um ein Aminosilan **AS** der Formel (III) oder um ein Aminosilan der Formel (V).

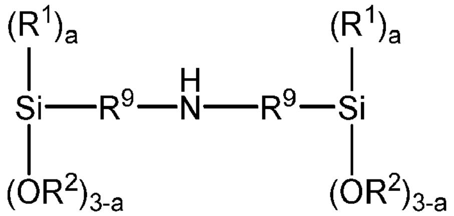

(V)

Dabei weisen die Reste $R^1$ und $R^2$ sowie der Index a die vorher genannten Bedeutungen auf.

$R^9$ steht hierbei unabhängig voneinander für eine zweiwertige, lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

Besonders bevorzugt als Organosilan **OS1** ist ein Aminosilan der Formel (V).

Beispiele für geeignete Organosilane der Formel (V) sind beispielsweise die Organosilane ausgewählt aus der Gruppe umfassend Bis-[3-(trimethoxysilyl)-propyl]-amin und Bis-[3-(triethoxysilyl)-propyl]-amin.

Die Herstellung des silanterminierten Polyurethanpolymers **STP** erfolgt bevorzugt in Anwesenheit eines Katalysators **K,** der die Reaktion des Polyisocyanats **I** mit dem Polyol **P** katalysieren kann. Bevozugt handelt es sich dabei um einen Metallkatalysator, insbesondere einen Zinn- oder Zirkonkatalysator.

Geeignete Metallkatalysatoren, die dem Fachmann auf dem Gebiet der Polyurethanchemie bestens bekannt sind, sind beispielsweise Verbindungen von Titan, Zirkonium oder Zinn, insbesondere Organozinnverbindungen, Organotitanate oder Organozirkonate, wobei diese Metallkatalysatoren insbesondere Liganden mit Alkoxygruppen, Sulfonatgruppen, Carboxylgruppen, Dialkylphosphatgruppen, Dialkylpyrophosphatgruppen und Diketonatgruppen aufweisen.

Besonders bevorzugt sind Zinn- und Zirkoniumkatalysatoren. Diese weisen gegenüber anderen Katalysatoren, beispielsweise Titanaten, den Vorteil auf, dass keine möglicherweise unerwünschten Verfärbungen in der Zusammensetzung auftreten.

Allgemein kann der Katalysator **K,** der üblicherweise nach der Reaktion im Polymer **STP** und damit der Zusammensetzung verbleibt, auch die Rolle eines Hydrolyse- oder Vernetzungskatalysators für Silane und silanfunktionelle Polymere übernehmen. Dies kann bei und nach der Anwendung der Haftvermittlerzusammensetzung vorteilhaft sein, da eine wesentliche Beschleunigung oder Verbesserung der Haftvermittlerwirkung erzielt werden kann.

Weiterhin umfasst die erfindungsgemässe Haftvermittlerzusammensetzung bevorzugt mindestens einen Katalysator für die Vernetzung von silanfunktionellen Polymeren. Neben den obengenannten Metallkatalysatoren **K,** die diese Rolle übernehmen können, sind alle übliche, dem Fachmann auf dem Gebiet der Organosilanchemie bestens bekannten Hydrolyse- und Kondensationskatalysatoren für Organosilane und silanfunktionelle Polymere geeignet.

Insbesondere handelt es sich beim Katalysator um einen Metallkatalysator oder um eine stickstoffhaltige Verbindung.

Als Katalysator geeignete stickstoffhaltige Verbindungen sind insbesondere Amine wie insbesondere N-Ethyldiisopropylamin, N,N,N',N'-Tetramethylalkylendiamine, Polyoxyalkylenamine, 1,4-Diazabicyclo[2.2.2]octan; Aminosilane wie insbesondere 3-Aminopropyl-trimethoxysilan, 3-Aminopropyldimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.
Insbesondere geeignet sind auch Kombinationen verschiedener Katalysatoren, insbesondere Kombinationen aus mindestens einem Metallkatalysator und mindestens einer stickstoffhaitigen Verbindung.

Weiterhin umfasst die Bindemittelzusammensetzung, die in der erfindungsgemässen Haftvermittlerzusammensetzung enthalten ist, mindestens ein weiteres Organosilan **OS2** und/oder ein Organotitanat **OT.** Das Organosilan **OS2** weist in vielen geeigneten Formen organische Reaktivgruppen auf, die mit Isocyanaten reagieren können. Deshalb ist es wichtig, dass das silanterminierte Polyurethanpolymer **STP** in Abwesenheit eines Organosilans **OS2** hergestellt wird. Dies kann beispielsweise erreicht werden, indem zuerst das silanterminierte Polyurethanpolymer **STP** vollständig, also unter Reaktion nahezu aller Isocyanatgruppen, hergestellt wird und erst danach das Organosilan **OS2** zugegeben wird. Alternativ kann das silanterminierte Polyurethanpolymer **STP** vorgängig in einem anderen Gefäss hergestellt werden, und erst danach mit dem Organosilan **OS2** und weiterer Bestandteile zur erfindungsgemässen Haftvermittlerzusammensetzung formuliert werden.

Als Organosilane **OS2** sind einerseits alle Organosilane geeignet, die für als Organosilan **OS1** geeignet sind, wie weiter oben beschrieben. Weiterhin geeignet sind beispielsweise die Organo-Siliziumverbindungen ausgewählt aus der Gruppe umfassend Octyltrimethoxysilan, Dodecyltrimethoxysilan, Hexadecyltrimethoxysilan, Methyloctyldimethoxysilan;
3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan;
3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxa-heptyldimethoxymethylsilan, N-(Methyl)-3-aminopropyltrimethoxysilan, N-(n-butyl)-3-aminopropyltrimethoxysilan;
3-Mercaptopropyltriethoxysilan, 3-Mercaptopropyltrimethoxysilan, 3-Mercaptopropyl-methyldimethoxysilan;
3-Acylthiopropyltrimethoxysilan;
Vinyltrimethoxysilan und Vinyltriethoxysilan.
Bis(3-trimethoxysilylpropyl)tetrasulfan, Bis(3-methyldimethoxysilyl-propyl)tetrasulfan, Bis(3-triethoxylsilylpropyl)tetrasulfan, Bis(3-methyldiethoxysilylpropyl)tetrasulfan, Bis(3-trimethoxysilylpropyl)disulfid, Bis(3-methyldimethoxysilylpropyl)disulfid, Bis(3-triethoxylsilylpropyl)disulfid und Bis(3-methyldiethoxysilylpropyl)disulfide;
Isocyanuratosilanverbindungen wie 1,3,5-N-Tris(3-trimethoxysilylpropyl)-isocyanuratosilan, 1,3,5-N-Tris(3-methyldimethoxysilylpropyl)isocyanuratosilan, 1,3,5-N-Tris(3-triethoxysilylpropyl)isocyanuratosilan, 1,3,5-N-Tris(3-methyl-diethoxysilylpropyl)isocyanuratosilan;
Auch geeignet sind die genannten Organo-Siliziumverbindungen, deren Alkoxygruppen durch Acetoxygruppen ersetzt sind, wie zum Beispiel Octyltriacetoxysilan ($Octyl\text{-}Si(O(O{=}C)CH_3)_3$). Derartige Organo-Siliziumverbindungen spalten Essigsäure bei der Hydrolyse ab.
Ebenfalls geeignet sind Teilhydrolysate, Hydrolysate und Kondensate dieser genannten Silane, die als oligomere Organosiloxane auch kommerziell erhältlich sind.
Weiterhin geeignet sind Hydroxysilane, beispielsweise solche, welche weiter oben als Organosilan **OS1** beschrieben werden.

Weiterhin geeignet als Organosilan **OS2** sind die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis-(triethoxysilylpropyl)tetrasulfan), Bis(triethoxysilylpropyl)disulfid.

Weiterhin geeignet als Organosilan **OS2** sind die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1 H,3H,5H)-trion-harnstoff (=Tris(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Bevorzugt als Organosilane **OS2** sind Aminosilane. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Die erfindungsgemässe Haftvermittlerzusammensetzung enthält weiterhin zusätzlich oder alternativ zum Organosilan **OS2** mindestens ein Organotitanat **OT.** Die erfindungegemässe Zusammnesetzung kann nur Organotitanat **OT** enthalten, nur Organosilan **OS2,** oder eine Mischung aus beiden.

Besonders bevorzugt sind Zusammensetzungen, als Organosilan **OS2** und/oder Organotitanat **OT** mindestens eine, bevorzugt mindestens zwei Verbindungen umfasst, ausgewählt aus der Gruppe umfassend Aminosilane, Hydroxysilane, Epoxysilane, Mercaptosilane, Isocyanuratosilane, Reaktionsprodukte aus Aminen und Epoxysilanen, Reaktionsprodukten aus Aminosilanen und Epoxiden, Reaktionsprodukte aus Aminosilanen und Epoxysilanen, Reaktionsprodukte aus Isocyanaten und Aminosilanen, Reaktionsprodukte aus Isocyanaten und Hydroxysilanen, Tetraalkoxytitanaten, Dialkoxy-bis-acetylacetonato-Titanaten, sowie Mischungen, Hydrolysate, Teilhydrolysate und/oder Kondensate dieser Verbindungen.

Das mindestens eine Organotitanat **OT** weist hierbei mindestens einen über eine Sauerstoff-Titan-Bindung an das Titanatom gebundenen Substituenten auf.

Besonders geeignet sind Verbindungen, bei denen alle an das Titan gebundene Substituenten aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden voneinander sein können. Besonders geeignet als Carboxylatgruppen haben sich insbesondere Carboxylate von Fettsäuren erwiesen. Als bevorzugtes Carboxylat gilt Decanoat.

Organo-Titanverbindungen, die geeignet sind als Organotitanat **OT,** sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor® ET, IBAY, TBT, TOT TPT, NPT, BTM, AA, AA-75, AA-95, AA-105, TE, ETAM, OGT von DuPont oder Dorf Ketal.

Als bevorzugt gelten Ken-React® KR 7, KR 9S, KR 12, KR 26S, KR 38S, KR44, LICA 09, LICA 44, NZ 44, sowie Tyzor® ET, IBAY, TBT, TOT, TPT, NPT, BTM, AA, AA-75, AA-95, AA-105, TE, ETAM, OGT von DuPont / Dorf Ketal. Besonders bevorzugt sind Tyzor® TBT, Tyzor® OGT und, besonders bevorzugt, Tyzor® IBAY.

Es ist dem Fachmann klar, dass diese Organo-Titanverbindungen unter dem Einfluss von Wasser hydrolysieren und an das Ti-Atom gebundene OH-Gruppen bilden. Derartige hydrolysierte, beziehungsweise teilhydrolysierte, Organo-Titanverbindungen können dann ihrerseits kondensieren und Kondensationsprodukte bilden, welche Ti-O-Ti Bindungen aufweisen. Sind Silane und/oder Titanate im Haftvermittler gemischt, sind auch gemischte Kondensationsprodukte möglich, welche Si-O-Ti Bindungen aufweisen. Ein geringer Anteil an derartigen Kondensationsprodukten ist möglich, insbesondere wenn sie löslich, emulgierbar oder dispergierbar sind.

Die erfindungsgemässe Zusammensetzung enthält 1.6 bis 16 Gew.-%, bevorzugt 2 bis 10 Gew.-%, bezogen auf die gesamte

Haftvermittlerzusammensetzung, mindestens eines Organosilans **OS2** und/oder Organotitanats **OT.**

Weiterhin umfasst die Bindemittelzusammensetzung, die in der erfindungsgemässen Haftvermittlerzusammensetzung enthalten ist, mindestens ein Lösungsmittel **L1.** Die gesamte Haftermittlerzusammensetzung enthält weiterhin mindestens ein Lösungsmittel **L2.** Die Lösungsmittel **L1** und **L2** können dabei gleich oder verschieden sein.

Als Lösungsmittel **L1** sind alle Lösungsmittel geeignet, welche die Bestandteile der Bindemittelzusammensetzung genügend lösen oder zumindest dispergieren können, damit eine stabile Lösung oder Dispersion entsteht. Weiterhin sollen die Lösungsmittel **L1** keine gegenüber Isocyanaten oder Alkoxysilanen reaktive funktionelle Gruppen wie Hydroxylgruppen aufweisen. Alkohole sind somit beispielsweise nicht geeignet.

Es ist vorteilhaft, wenn die Lösungsmittel **L1** und **L2** eine vergleichweise hohe Flüchtigkeit, also einen vergleichsweise niedrigen Siedepunkt und/oder Dampfdruck aufweist, damit eine rasches Verdunsten oder Verflüchtigen des Lösungsmittels **L1** nach Anwendung des erfindungsgemässen Haftvermittlers auftritt. Es können aber auch schwerflüchtige oder hochsiedende Lösungsmittel verwendet werden, die dann aber mit einem "wipe-off" Verfahren (Abwischen oder Aufsaugen des Lösungsmittels nach Abbinden des Bindemittels auf dem Substrat) entfernt werden müssen.

Generell ist es bevorzugt, keine Lösungsmittel **L1** und/oder **L2** zu verwenden, die toxikologisch sehr bedenklich oder äusserst leicht entflammbar sind. In diesen Fällen muss der Anwender dafür Sorge tragen, dass die Arbeitsplatzsicherheit genügend gewährleistet ist, beispielsweise durch genügende Lüftung, persönliche Schutzausrüstung, oder Ausrüstung zur Vermeidung statischer Entladungen.

Geeignete Lösungsmittel **L1** und **L2** sind beispielsweise Ester von linearen oder verzweigten $C_1$ bis $C_6$ Carbonsäuren, insbesondere Mono- oder Disäuren, die mit Fettalkoholen oder linearen oder verzweigten $C_1$ bis $C_6$ Monoalkoholen verestert worden sind, sowie Ester von niedermolekularen Alkoholen, insbesondere $C_1$- bis $C_6$-Alkoholen, die mit Fettsäuren verestert worden sind und cyclische solche Ester. Beispiele hierfür sind Laurinsäuremethylester, Laurinsäureethylester, Myrstinsäuremethylester und Laurylacetat.

Als Ester insbesondere geeignet sind ebenfalls Ester der Kohlensäure oder Monocarbonsäuren oder Polycarbonsäuren. Als Ester der Kohlensäure sind insbesondere die Dialkylcarbonate zu nennen.

Weiterhin sind Ester von Carbonsäuren mit Polyethylenglykolen oder Polypropylenglykolen geeignet.

Weiterhin geeignete Ester sind organische Phosphonate und Phosphate. Weiterhin geeignet sind cyclische Ester, d.h.

Lactone.

Weiterhin geeignet als Lösungsmittel **L1** und **L2** sind lineare oder verzweigte Etherverbindungen mit einem oder zwei Etherfunktionen, die $C_2$ bis $C_{12}$ Alkylreste verbrücken.

Als Ether sind insbesondere auch Alkoxy-abgeschlossene Polyole, insbesondere Alkoxy-abgeschlossene Polyoxyalkylenpolyole, auch Alkoxyterminierte Polyetherpolyole geeignet. Beispiele hierfür sind Polypropylenglycol-Dialkylether oder Polyethylenglycol-Dialkylether. Beispiele hierfür sind Tetraglyme (Tetraethylenglycoldimethylether), Pentaglyme (Pentaethylenglycoldimethylether), Hexaglyme (Hexaethylenglycoldimethylether), Polyethylenglycoldimethylether, beispielsweise wie sie von Clariant unter den Namen Polyglykol DME 200 oder Polyglykol DME 250 kommerziell vertrieben werden, Diethylenglycoldibutylether, Polypropylenglykoldimethylether, Polyproproylenglykoldibutylether, Polyethylenglycolmonomethylethermonoacetat und Polypropylenglycolmonomethylethermonoacetat. Polypropylenglycol-Diether haben gegenüber den entsprechenden Polyethylenglycol-Diether den Vorteil, dass sie typischerweise über ein besseres Lösungsverhalten sowie bei höheren Molekulargewichten noch flüssig sind.

Ausserdem geeignet als Lösungsmittel **L1** und **L2** sind Ketone mit linearen oder verzweigten $C_1$ bis $C_{12}$ Alkylresten sowie Amide, insbesondere Fettsäureamide oder cyclische Amide, d.h. Lactame.

Die Haftvermittlerzusammensetzung kann ausserdem als Lösungsmittel **L1** und/oder **L2** ein bei Raumtemperatur flüssiges Trägermittel mit einem Siedepunkt von grösser als 250°C bei Normdruck oder einem Dampfdruck von weniger als 0.1 mbar bei 20°C. Diese Art von Lösemittel hat den Vorteil, dass VOC-arme oder VOC-freie Zusammensetzungen formuliert werden können. "VOC" bezeichnet flüchtige organische Verbindungen.

Als Trägermittel für VOC-arme oder VOC-freie Zusammensetzungen geeignet sind einerseits Weichmacher mit einem Siedepunkt von grösser als 250°C bei Normdruck oder einem Dampfdruck von weniger als 0.1 mbar bei 20°C. Insbesondere sind die Weichmacher ausgewählt aus der Gruppe bestehend aus Ester der Phthalsäuren, Ester der aliphatischen Dicarbonsäure und Fettsäureester und organische Ester der Phosphorsäuren. Als Ester der Phthalsäuren sind insbesondere die Dialkylphthalate, vorzugsweise die Diester der Phthalsäure und der $C_8$ - $C_{16}$-Alkohle, insbesondere Dioctylphthalat (DOP), Diisononylphthalat (DINP) und Diisodecylphthalat (DIDP) geeignet.

Ester der aliphatischen Dicarbonsäuren sind insbesondere die Ester der Adipinsäure oder der Sebacinsäure, wie beispielsweise Dioctyladipat (DOA), Diisodecyladipat (DIDA).

Es können auch Polyester verwendet werden können, wie beispielsweise Polyester von Adipinsäure oder Sebacinsäure mit Diolen, wie beispielsweise Hexandiol oder Butandiol, mit der Massgabe, dass diese Polyester bei Raumtemperatur flüssig sind.

Es gilt jedoch bei allen diesen Verbindungen, die als Lösungsmittel **L1** und/oder **L2** eingesetzt werden, die Massgabe, dass diese bei 23°C, bevorzugt bei 10°C, insbesondere bei 5 °C flüssig (fliessfähig) sein müssen.

Bevorzugte Lösungsmittel **L1** und/oder **L2** sind Methylacetat, Ethylacetat, Butylacetat, Isopropylacetat, 1-Methoxy-2-propylacetat, 3-Methoxy-n-Butylacetat, Aceton, Methylethylketon, Methylisobutylketon, Toluol, Ethylbenzol sowie Gemische davon. Am meisten bevorzugt sind 3-Methoxy-n-Butylacetat, Methylethylketon und Butylacetat.

Die Menge an Lösungsmittel **L1** in der Bindemittelzusammensetzung beträgt zwischen 40 und 80 Gew.-%, bevorzugt zwischen 50 und 70 Gew.-%, bezogen auf die Bindemittelszusammensetzung.

Es kann durchaus von Vorteil sein, insbesondere wenn die Haftvermittler nicht oder zu wenig löslich im Lösungsmittel **L1** und/oder **L2** sind, dass Tenside, insbesondere in der Form als Emulgator und/oder Co-Emulgator, Bestandteile der Haftvermittlerzusammensetzungen sind. Solche Substanzen sind dem Fachmann auf dem Gebiet der lösungsmittelbasierten Haftvermittlerzusammensetzungen bekannt.

Die Bindemittelzusammensetzung enthält weiterhin bevorzugt mindestens ein Trocknungsmittel. Dieses erhöht die Lagerstabilität der Zusammensetzung, indem allfällig vorhandenes Wasser gebunden und somit die unerwünschte Hydrolyse von Alkoxysilanen im Gebinde gehemmt wird.

Als Trocknungsmittel geeignet sind zum Beispiel reaktive Silane, wie Tetramethoxysilan, Vinyltrimethoxysilan, $\alpha$-funktionelle Silane wie N-(Silylmethyl)-O-methyl-carbamate, insbesondere N-(Methyldiethoxysilylmethyl)-O-methylcarbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe, sowie Isocyanate.

Die Menge an Trockungsmittel in der Bindemittelzusammensetzung beträgt zwischen 0 und 3 Gew.-%, bevorzugt zwischen 0.5 und 2 Gew.-%, bezogen auf die Bindemittelszusammensetzung.

Weiterhin kann es vorteilhaft sein, wenn die Haftvermittlerzusammensetzung einen Füllstoff enthält. Der Füllstoff kann anorganisch oder organisch sein. Es ist besonders vorteilhaft, wenn der Füllstoff einen Partikeldurchmesser von weniger als 100 Mikrometer, insbesondere von weniger als 1 Mikrometer, aufweist. Besonders bevorzugt sind Russe, Kreide, insbesondere beschichtete Kreiden, und unterschiedliche Formen von Siliziumdioxid, wie Quarzmehl, colloidale oder pyrogene Kieselsäuren, bevorzugt pyrogene Kieselsäuren. Als meist bevorzugter Füllstoff gilt Industrieruss (carbon black). Dieser führt zu einer besonders guten UV-Beständigkeit der Verklebung, was beispielsweise für Fenster- und Automobilglasverklebungen vorteilhaft ist. Bevorzugte Mengen an Füllstoff, insbesondere Industrieruss, sind 0 bis 30 Gew.-%, insbesondere 5 bis 20 Gew.-%, bevorzugt 7 bis 15 Gew.-%, bezogen auf die gesamte Haftvermittlerzusammensetzung.

Die Verwendung von Füllstoffen ist darüber hinaus insbesondere für die mechanische Verstärkung der Haftvermittlerzusammensetzung geeignet. Weiterhin lassen sich unter Verwendung von Füllstoffen dickschichtigere Applikationen realisieren.
Wenn es sich bei der Haftvermittlerzusammensetzung um einen Primer handelt, kann es vorteilhaft sein, wenn zusätzlich mindestens ein organischer Filmbildner eingesetzt wird. Hierbei kann es sich beispielsweise um ein Epoxidharz oder Poly(meth)acrylat handeln.
Die Zusammensetzung kann zusätzlich auch noch weitere Bestandteile aufweisen. Insbesondere handelt es sich hierbei um Pigmente, Farbstoffe, UV-Marker, Fluoreszenzindikatoren, Verlaufsadditive, Biozide, insbesondere Algizide oder Fungizide, Thixotropiermittel, Flammhemmer und Stabilisatoren.

Insbesondere bevorzugt enthält die erfindungsgemässe Haftvermittlerzusammensetzung einen UV-Marker. Dabei handelt es sich um eine Substanz, die unter UV-Licht sichtbar wird. Die Verwendung einer solchen Substanz hat den Vorteil, dass nach dem Auftragen von transparenten Haftvermittlerzusammensetzungen überprüft werden kann, wo die Zusammensetzung genau aufgetragen worden ist und/oder wo der Klebstoff aufzutragen ist.

Die erfindungsgemässen Haftvermittlerzusammensetzungen lassen sich vielseitig verwenden. In einer besonders bevorzugten Ausführungsform stellen sie einen Primer oder einen Haftvermittlervoranstrich dar.

In einem weiteren Aspekt betrifft die vorliegende Erfindung ein Verfahren zur Verklebung oder zum Abdichten. Dieses Verfahren umfasst die folgenden Schritte:

i) Applikation einer Haftvermittlerzusammensetzung, wie sie vorgängig beschrieben wurde, auf ein zu verklebendes oder abzudichtendes Substrat **S1**
ii) Applikation eines Klebstoffes oder Dichtstoffes auf die Zusammensetzung, welche sich auf dem Substrat **S1** befindet
iii) Kontaktieren des Klebstoffs oder Dichtstoffes mit einem zweiten Substrat **S2;**

oder

i') Applikation einer Haftvermittlerzusammensetzung, wie sie vorgängig beschrieben wurde, auf ein zu verklebendes oder abzudichtendes Substrat **S1** ii') Applikation eines Klebstoffes oder Dichtstoffes auf die Oberfläche eines zweiten Substrates **S2**
iii') Kontaktieren des Klebstoffes oder Dichtstoffes mit der Zusammensetzung, welche sich auf dem Substrat **S1** befindet;

oder

i") Applikation einer Haftvermittlerzusammensetzung, wie sie vorgängig beschrieben wurde, auf ein zu verklebendes oder abzudichtendes Substrat **S1**
ii") Applikation eines Klebstoffes oder Dichtstoffes zwischen die Oberflächen des Substrates **S1** und **S2.**

Das zweite Substrat **S2** besteht hierbei aus demselben oder unterschiedlichem Material wie das Substrat **S1.**
Typischerweise schliesst sich anschliessend an den Schritt iii), iii') oder ii") ein Schritt iv) des Aushärtens des Kleb- oder Dichtstoffes an.

Als Kleb- oder Dichtstoff kann grundsätzlich jeder Klebstoff oder Dichtstoff verwendet werden. Die Auswahl richtet sich unter anderem nach der Offenzeit und den mechanischen Erfordernissen an den gebildeten Verbund. Es hat sich gezeigt, dass dieses Verfahren insbesondere gut für Polyurethan-Kleb- oder Dichtstoffe, insbesondere für Polyurethanklebstoffe, welche mindestens ein Isocyanatgruppen aufweisendes Polyurethanprepolymer enthalten, geeignet ist. Derartige Polyurethanklebstoffe härten unter dem Einfluss von Luftfeuchtigkeit über eine Vernetzungsreaktion der Isocyanatgruppen aus und sind kommerziell breit erhältlich, insbesondere unter dem Namen Sikaflex® von Sika Schweiz AG. Ebenfalls besonders gut geeignet ist die Haftvermittlerzusammensetzung für silanterminierte (silanfunktionelle) Kleb-und Dichtstoffe.
Vor dem Schritt ii), ii') oder ii") kann allenfalls ein Schritt des Abwischens mit einem trocknen Tuch (in der Fachsprache vielfach als "wipe off" bezeichnet) erfolgen.
Mit der Applikation des Klebstoffes oder Dichtstoffes kann zugewartet werden bis die Haftvermittlerzusammensetzung abgelüftet ist. Es hat sich jedoch erstaunlicherweise gezeigt, dass die Applikation des Klebstoffes oder des Dichtstoffes in den meisten Fällen auch direkt auf den noch feuchten Haftvermittlerzusammensetzungsfilm, d.h. "nass in nass", möglich ist, ohne dass dies bemerkenswerte Nachteile in der Haftung oder der Mechanik des ausgehärteten Dicht- oder Klebstoffes zur Folge hätte.
Das Substrat **S1** kann gleich oder verschieden von Substrat **S2** sein. Geeignete Substrate **S1** oder **S2** sind beispielsweise anorganische Substrate wie Glas, Glaskeramik, Beton, Mörtel, Backstein, Ziegel, Gips und Natursteine wie Granit oder

Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke. Insbesondere bevorzugt als Substrate **S1** oder **S2** sind Glas, Glaskeramik, Aluminium und Lacke, insbesondere in der Form als Automobillack.
Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.
Aus einem derartigen Verfahren zur Verklebung oder zum Abdichten resultiert ein Artikel. Da das Verfahren breit eingesetzt werden kann, zum Beispiel in der industriellen Verfertigung oder im Tief- oder Hochbau, ist auch dieser Artikel sehr vielfältiger Natur.
Insbesondere handelt es sich hierbei um einen Artikel, welcher ein Bauwerk, ein Industriegut oder ein Transportmittel ist. Insbesondere stellt er ein Gebäude, oder ein Teil davon dar. Oder der Artikel ist insbesondere ein Transportmittel, insbesondere ein Automobil, Bus, Lastkraftwagen, Schienenfahrzeug, Schiff oder ein Luftfahrzeug.

## Beispiele

Es wurden die folgenden Haftvermittlerzusammensetzungen gemäss Tabelle 1 hergestellt, indem der Haftvermittler dem Trägermittel zugegeben wurde und unter Stickstoff gut verrührt wurde.
Es wurden die folgenden Substanzen und Bezeichnungen verwendet:

<u>Verwendete Polvole **P** für die Herstellung von Polymer **STP**</u>

Tabelle 1: Verwendete Polyole P.

| Bezeichnung | Kategorie | OH-Zahl | Funktionalität | Äquivalenzgewicht |
|---|---|---|---|---|
| Kuraray C590 | Polycarbonat-Polyol | 229 | 2 | 245 |
| Desmophen C1100 | Polycarbonat-Polyol | 115 | 2 | 488 |
| Desmophen C1200 | Polycarbonat-Polyol | 56 | 2 | 1002 |
| Oxymer M112 | Polycarbonat-Polyol | 112 | 2 | 501 |
| Capa 3031 | Polyester-Polyol | 560 | 3 | 100 |
| Capa 4101 | Polyester-Polyol | 218 | 4 | 257 |
| Dynacoll 7131 | Polyester-Polyol | 35 | 2 | 1603 |
| Baycoll 670 | Polyester-Polyol | 141 | 3.2 | 398 |
| Baycoll AV 2113 | Polyester-Polyol | 109 | 3.2 | 515 |
| Baycoll AS 2060 | Polyester-Polyol | 60 | 2.7 | 935 |

Die Polyole in Tabelle 1 wurden als Polyol **P** für die Herstellung der beispielhaften silanterminierten Polyurethanpolymere **STP** verwendet.

<u>Weitere verwendete Rohstoffe</u>

Für die Herstellung der Beispielzusammensetzungen wurden zusätzlich die Rohstoffe der Tabelle 2 verwendet.

Tabelle 2: Weitere verwendete Rohstoffe.

| Bezeichnung | Funktion | Chemische Bezeichnung | Hersteller |
|---|---|---|---|
| Silquest A1170 | Organosilan **OS2** | Bis-(trimethoxysilylpropyl)amin | Momentive |
| Silquest A189 | | 3-Mercaptopropyltrimethoxysilan | Momentive |
| Silquest A-Link 597 | | Tris(3-Trimethoxysilylpropyl)-Isocyanurat | Momentive |
| Tyzor IBAY | Organotitanat **OT** | Di-2-Butyl-bis-Acetylacetonato-Titanat | Dorf Ketal |

(fortgesetzt)

| **Bezeichnung** | **Funktion** | **Chemische Bezeichnung** | **Hersteller** |
|---|---|---|---|
| $Al(2\text{-}OBu)_3$ | - | Aluminium-tri-*sec*-butoxid | Sigma Aldrich |
| MEK | Lösungsm. **L2** | Methylethylketon | Sigma Aldrich |
| IPDI | Isocyanat **I** | Isophorondiisocyanat | Evonik |
| Butoxyl | Lösungsm. **L1** | 3-Methoxy-n-Butylacetat | Celanese |
| TIB 223 | Katalysator **K** | Dioctylzinndiketanoat | TIB Chemicals |

Herstellung der silanterminierten Polyurethanpolymere **STP**

Für jedes silanterminiertes Polyurethanpolymer **STP** wurde eine Lösung des Polyols aus Tabelle 1 (50 Gew.-% in Butoxyl) mit einer Lösung IPDI (50 Gew.-% in Butoxyl) vermischt und gut gerührt. Danach wurde 0.1 Gew.-% TIB 223 (Katalysator **K)** beigefügt und gerührt, bis die exotherme Reaktion startet. Danach wurde die Reaktionsmischung während 24 h bei 50°C weiter reagieren gelassen. Nach Abkühlen auf Raumtemperatur nach Ende der Reaktion wurde die Mischung mit einer berechneten Menge vom Silan-Endcapper (Organosilan **OS1**) Silquest A1170 versetzt, dessen Menge genau der Menge an freien NCO-Gruppen im gebildeten Polyurethanpolymer entsprach. Die Details dieser hergestellten silanterminierten Polyurethanpolymere **STP** sind in Tabelle 3 aufgelistet. Die Spalte "NCO : OH" bezeichnet das eingesetzte molare Verhältnis von NCO- zu OH-Gruppen vor der Reaktion mit Silquest A1170 und die Spalte "Gew.-% NCO" bezeichnet den Anteil an freien NCO Gruppen nach der Reaktion von Polyol und IPDI, aber vorr der Reaktion mit Silquest A1170. Anhand diesem letztgenannten Wert wurde die Menge Silquest A1170 festgelegt.

Tabelle 3: Details zu den hergestellten Polymeren STP. Nicht erfindungsgemässe sind mit "Ref." gekennzeichnet. * berechnete Werte.

| **Polymer STP** | **Isocyanat** | **Polyol** | **NCO : OH*** | **Gew.% NCO*** |
|---|---|---|---|---|
| STP01 (Ref.) | IPDI | Desmophen C1200 | 1.9 | 3.0 |
| STP02 | IPDI | Kuraray C590 | 1.9 | 8.2 |
| STP03 (Ref.) | IPDI | Oxymer M112 | 1.9 | 5.2 |
| STP04 | IPDI | Desmophen C1100 | 1.9 | 5.3 |
| STP05 (Ref.) | IPDI | Dynacoll 7131 | 1.98 | 2.05 |
| STP06 (Ref.) | IPDI | Baycoll AS 2060 | 2.21 | 4.2 |
| STP07 (Ref.) | IPDI | Baycoll AS 2060 | 2 | 3.5 |
| STP08 | IPDI | Capa 3031 | 2 | 12.9 |
| STP09 | IPDI | Capa 4101 | 2.5 | 11.66 |
| STP10 | IPDI | Capa 4101 | 2.02 | 8.8 |
| STP11 | IPDI | Baycoll 670 | 2 | 5.55 |
| STP12 (Ref.) | IPDI | Baycoll AV 2113 | 2 | 6.66 |

Formulierung der Haftvermittlerzusammensetzungen

Zunächst wurde aus jedem der hergestellten Polymere STP01 bis STP13 eine Bindemittelzusammensetzung hergestellt, indem das Polymer mit MEK zu einer 20%igen Lösung verdünnt wurde (20 Gew.-% Polymer). Danach wurden, je nach Versuch, weitere Additive wie Organosilan **OS2** hinzugefügt. Jede resultierende Zusammensetzung wurde mit MEK so verdünnt, dass eine Lösung mit einem Feststoffgehalt an 20 Gew.-% resultierte. Der Feststoffgehalt bezeichnet hierbei die Summe aller Substanzen, die nicht flüchtig sind. Die Details der so hergestellten Haftvermittlerzusammensetzungen sind in Tabelle 4 gezeigt. Alle numerischen Angaben zu den Additiven bezeichnen Gew.-%, bezogen auf die gesamte Zusammensetzung.

Tabelle 4: Hergestellte Haftvermittlerzusammensetzungen. Die mit "Inv" bezeichneten sind erfindungsgemäss, die mit "Ref" bezeichneten sind nicht erfindungsgemäss.

| **Beispiel** | **Polymer STP** | **Additive** | | | | |
|---|---|---|---|---|---|---|
| | | *Silquest A1170* | *Silquest A 189* | *SilquestA-Link 597* | *Tyzor IBAY* | *$Al(2\text{-}OBu)_3$* |
| **Ref-01** | STP01 | - | - | - | 2 | - |
| **Ref-02** | STP02 | - | - | - | - | - |
| **Inv-01** | STP02 | - | - | - | 2 | - |
| **Inv-02** | STP02 | 4 | - | - | 4 | - |
| **Inv-03** | STP02 | 2 | - | - | 2 | 2 |
| **Ref-03** | STP02 | - | - | - | - | 2 |
| **Ref-04** | STP03 | - | - | - | 2 | - |
| **Ref-05** | STP03 | - | 2 | - | 2 | - |
| **Ref-06** | STP04 | - | - | - | - | - |
| **Inv-04** | STP04 | - | 2 | 2 | 2 | - |
| **Ref-07** | STP05 | - | - | - | 2 | - |
| **Ref-08** | STP05 | 2 | - | - | 2 | - |
| **Ref-09** | STP06 | - | - | - | 2 | - |
| **Ref-10** | STP07 | 4 | - | - | - | - |
| **Ref-11** | STP07 | 4 | - | - | 4 | - |
| **Ref-12** | STP08 | - | - | - | - | - |
| **Inv-05** | STP08 | 2 | - | - | 2 | - |
| **Ref-13** | STP09 | - | - | - | - | - |
| **Inv-06** | STP09 | - | 2 | - | 2 | - |
| **Inv-07** | STP10 | 4 | - | - | 4 | - |
| **Ref-14** | STP11 | - | - | - | - | - |
| **Inv-08** | STP11 | - | - | - | 2 | - |
| **Inv-09** | STP11 | 2 | - | - | - | - |
| **Inv-10** | STP11 | 2 | - | - | 2 | - |
| **Ref-15** | STP12 | 4 | - | - | - | - |
| **Ref-16** | STP12 | 2 | - | - | 2 | - |

Die Haftvermittlerzusammensetzungen in Tabelle 4 wurden in dicht schliessende Glasflaschen gegeben und nach 1 Tag Lagerung bei Raumtemperatur für die Haftversuche verwendet. Als Substrat wurde Floatglass (Firma Rocholl, Deutschland) verwendet, wobei sowohl die Luftseite wie die Zinnseite für die Verklebung genutzt wurden.

Test der Offenzeit

Bei einer ausgewählten erfindungsgemässen Haftvermittlerzusammensetzung wurde die Offenzeit geprüft. Für eine beschleunigte Prüfung wurden die Substrate mit appliziertem Haftvermittler unter Kataplasmabedingungen (70°C, 100 % rel. Luftfeuchtigkeit) gelagert und danach entsprechend der vorhergehend beschriebenen Methode verklebt. Die Resultate sind Tabelle 56 gezeigt.

Tabelle 5: Verklebungen auf Floatglass (luftseitig) direkt und nach Kataplasma-Lagerung.

| Beispiel | Direkt | 7d CL | 14d CL |
|---|---|---|---|
| Inv-04 | 100 | 100 | 100 |

Adhäsionstest der Haftvermittlerzusammensetzungen

Die Zusammensetzungen wurden nun jeweils auf eine Luftseite und eine Zinnseite eines Floatglasssubstrates mittels damit getränktem Zellulosetuch (Tela®, Tela-Kimberly Switzerland GmbH) appliziert. Alle Substratuntergründe wurden unmittelbar vor der Applikation der Haftvermittlerzusammensetzung durch Abwischen mittels eines Zellulosetuches (Tela®), welches mit einem Gemisch Isopropanol/Wasser (2:1) getränkt wurde, gereinigt und mindestens 2 Minuten vor der Applikation der Haftvermittlerzusammensetzung abgelüftet. Nach 5 Sekunden nach Applikation der Haftvermittlerzusammensetzung wurde mit einem trockenen Zellulosetuch abgewischt ("Wipe off"). Innert 10 Minuten wurde anschliessend eine Rundraupe von einem SikaFlex® 250 Klebstoff mittels Auspresskartusche und Düse aufgetragen. SikaFlex® 250 ist ein hochmoduliger, einkomponentiger feuchtigkeitshärtender Polyurethanklebstoff, welcher Polyurethanprepolymere mit Isocyanatgruppen, jedoch keine Haftvermittler enthält und bei Sika Schweiz AG kommerziell erhältlich ist.

Der Klebstoff wurde nach einer Aushärtezeit von 7 Tagen Klimaraumlagerung (‚KL') (23°C, 50% rel. Luftfeuchtigkeit), sowie nach einer anschliessenden Wasserlagerung (‚WL') in Wasser bei 23°C während 7 Tagen, sowie nach einer anschliessend Kataplasma-Lagerung (‚CL') von 7 Tagen bei 70°C, 100 % rel. Luftfeuchtigkeit, sowie (in ausgewählten Beispielen) nach einer anschliessenden Hitzelagerung (‚HL') von 24 Stunden bei 120 °C im Ofen, getestet.

Die Haftung des Klebstoffes wurde mittels ‚Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Platzieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch visuelle Bestimmung des kohäsiven Anteils der Haftfläche:

Je höher der Anteil an kohäsivem Bruch ist, umso besser wird die Verklebung eingeschätzt. Testresultate mit Kohäsionsbrüchen von weniger als 50 %, insbesondere weniger als 30 %, gelten typischerweise als ungenügend.

Die Resultate sind in Tabelle 6 dargestellt.

Die Resultate aus Tabelle 6 zeigen deutlich, dass die erfindungsgemässen Haftvermittler unter allen geprüften Bedingungen deutlich bessere Adhäsionsresultate auf Floatglass erzielen.

Tabelle 6: Testresultate der Verklebungen auf Flotglass (Luft- und Zinnseite). Die mit "Inv" bezeichneten sind erfindungsgemäss, die mit "Ref" bezeichneten sind nicht erfindungsgemäss. "n/b" bedeutet, dass die Messung nicht durchgeführt wurde.

| Beispiel | Luftseite | | | | Zinnseite | | | |
|---|---|---|---|---|---|---|---|---|
| | *KL* | *WL* | *CL* | *HL* | *KL* | *WL* | *CL* | *HL* |
| **Ref-01** | 100 | 100 | 25 | n/b | 5 | 5 | 0 | n/b |
| **Ref-02** | 0 | 25 | 50 | n/b | 0 | 0 | 50 | n/b |
| **Inv-01** | 100 | 100 | 100 | 100 | 100 | 50 | 100 | n/b |
| **Inv-02** | 100 | 100 | 100 | 100 | 100 | 75 | 100 | n/b |
| **Inv-03** | 100 | 100 | 100 | 100 | 100 | 100 | 100 | n/b |
| **Ref-03** | 100 | 100 | 100 | 100 | 0 | 75 | 100 | n/b |
| **Ref-04** | 0 | 0 | 0 | n/b | 0 | 0 | 0 | n/b |
| **Ref-05** | 0 | 0 | 0 | n/b | 0 | 0 | 0 | n/b |
| **Ref-06** | 100 | 100 | 0 | n/b | 0 | 0 | 0 | n/b |
| **Inv-04** | 100 | 100 | 95 | n/b | 50 | 50 | 100 | n/b |

(fortgesetzt)

| Beispiel | Luftseite | | | | Zinnseite | | | |
|---|---|---|---|---|---|---|---|---|
| | *KL* | *WL* | *CL* | *HL* | *KL* | *WL* | *CL* | *HL* |
| **Ref-07** | 100 | 100 | 0 | n/b | 100 | 0 | 100 | n/b |
| **Ref-08** | 100 | 100 | 0 | n/b | 100 | 0 | 100 | n/b |
| **Ref-09** | 100 | 100 | 0 | n/b | 0 | 0 | 100 | n/b |
| **Ref-10** | 0 | 0 | 0 | n/b | 0 | 20 | 10 | n/b |
| **Ref-11** | 100 | 0 | 0 | n/b | 100 | 100 | 100 | n/b |
| **Ref-12** | 100 | 100 | 100 | n/b | 100 | 0 | 0 | n/b |
| **Inv-05** | 100 | 100 | 100 | n/b | 100 | 50 | 100 | n/b |
| **Ref-13** | 100 | 100 | 100 | n/b | 20 | 0 | 20 | n/b |
| **Inv-06** | 100 | 95 | 75 | n/b | 95 | 50 | 75 | n/b |
| **Inv-07** | 100 | 100 | 100 | n/b | 100 | 50 | 100 | n/b |
| **Ref-14** | 100 | 100 | 100 | 25 | 25 | 0 | 100 | 50 |
| **Inv-08** | 100 | 100 | 100 | 100 | 100 | 50 | 100 | 100 |
| **Inv-09** | 100 | 100 | 100 | 50 | 100 | 90 | 100 | 50 |
| **Inv-10** | 100 | 100 | 100 | 100 | 100 | 100 | 100 | 100 |
| **Ref-15** | 100 | 100 | 100 | n/b | 0 | 0 | 95 | n/b |
| **Ref-16** | 100 | 100 | 70 | n/b | 100 | 0 | 100 | n/b |

Alle hergestellten erfindungsgemässen Zusammensetzungen wiesen eine ausgezeichnete Lagerstabilität auf. Selbst nach mehreren Monaten waren keine Ausfällungen oder Trübungen zu beobachten.

## Patentansprüche

**1.** Haftvermittlerzusammensetzung enthaltend

a) zwischen 40 und 80 Gewichtsteile einer Bindemittelzusammensetzung, umfassend

i) 20 bis 40 Gew.-%, bezogen auf die Bindemittelzusammensetzung, mindestens eines silanterminierten Polyurethanpolymers **STP,** erhältlich aus mindestens einem Polyol **P,** mindestens einem aliphatischen Polyisocyanat **I** und mindestens einem Organosilan **OS1** bevorzugt in Gegenwart eines Katalysators **K,**
ii) 4 bis 20 Gew.-%, bezogen auf die Bindemittelzusammensetzung, mindestens eines Organosilans **OS2** und/oder Organotitanats **OT,**
iii) 0 bis 3 Gew.-%, bezogen auf die Bindemittelzusammensetzung, mindestens eines Trocknungsmittels,
iv) 40 bis 80 Gew.-%, bezogen auf die Bindemittelzusammensetzung, eines Lösungsmittels **L1;**

b) zwischen 0 und 30 Gewichtsteile Industrieruss;
c) zwischen 0 und 1 Gewichtsteile UV-Marker;
d) soviel eines Lösungsmittels **L2,** dass die Summe a) bis d) 100 Gewichtsteile ergibt;

wobei
das Organosilan **OS1** eine sekundäre Aminogruppe, eine Mercaptogruppe oder eine Hydroxylgruppe am organischen Rest aufweist und bevorzugt zwei Silangruppen aufweist, und das mindestens eine silanterminierte Polyurethanpolymer **STP** hergestellt wurde in Abwesenheit des Organosilans **OS2,** und das mindestens eine Polyol **P** eine mittlere OH-Funktionalität von mindestens 2 und ein Äquivalenzgewicht von höchstens 500 aufweist.

**2.** Haftvermittlerzusammensetzung gemäss Anspruch 1, **dadurch gekennzeichnet, dass** das Polyol **P** ausgewählt

ist aus der Gruppe Polycarbonatpolyole, Polyesterpolyole oder Poly(meth)acrylatpolyole.

3. Haftvermittlerzusammensetzung gemäss Anspruch 1 oder 2, **dadurch gekennzeichnet, dass** das Organosilan **OS2** und/oder Organotitanat **OT** mindestens eine, bevorzugt mindestens zwei Verbindungen umfasst, ausgewählt aus der Gruppe umfassend Aminosilane, Hydroxysilane, Epoxysilane, Mercaptosilane, Isocyanuratosilane, Reaktionsprodukte aus Aminen und Epoxysilanen, Reaktionsprodukten aus Aminosilanen und Epoxiden, Reaktionsprodukte aus Aminosilanen und Epoxysilanen, Reaktionsprodukte aus Isocyanaten und Aminosilanen, Reaktionsprodukte aus Isocyanaten und Hydroxysilanen, Tetraalkoxytitanaten, Dialkoxy-bis-acetylacetonato-Titanaten, sowie Mischungen, Hydrolysate, Teilhydrolysate und/oder Kondensate dieser Verbindungen.

4. Haftvermittlerzusammensetzung gemäss einem der Ansprüche 1 bis 3, **dadurch gekennzeichnet, dass** das Polyisocyanat **I** Isophorondiisocyanat umfasst.

5. Haftvermittlerzusammensetzung gemäss einem der vorhergehenden Ansprüche, **dadurch gekennzeichnet, dass** das molare Verhältnis von Isocyanatgruppen des Polyisocyanats **I** zu Hydroxylgruppen des Polyols **P** zwischen 2 und 4 liegt.

6. Haftvermittlerzusammensetzung gemäss einem der vorhergehenden Ansprüche, **dadurch gekennzeichnet, dass** das Polyol **P** eine mittlere OH-Funktionalität von zwischen 2 und 5, bevorzugt zwischen 2.5 und 4, aufweist.

7. Haftvermittlerzusammensetzung gemäss einem der vorhergehenden Ansprüche, **dadurch gekennzeichnet, dass** das mindestens eine Polyol **P** ein Äquivalenzgewicht von 100 bis 500, bevorzugt von 200 bis 400 aufweist.

8. Haftvermittlerzusammensetzung gemäss einem der vorhergehenden Ansprüche, **dadurch gekennzeichnet, dass** die Lösungsmittel **L1** und **L2** ausgewählt sind aus der Gruppe umfassend Methylacetat, Ethylacetat, Butylacetat, Isopropylacetat, 1-Methoxy-2-propylacetat, 3-Methoxy-n-butylacetat, Aceton, Methylethylketon, Methylisobutylketon, Toluol, Ethylbenzol sowie Gemischen davon.

9. Haftvermittlerzusammensetzung gemäss einem der vorhergehenden Ansprüche, **dadurch gekennzeichnet, dass** der Katalysator **K** einen Zinn-oder Zirkoniumkomplex umfasst.

10. Haftvermittlerzusammensetzung nach einem der vorhergehenden Ansprüche, enthaltend

    a) zwischen 50 und 70 Gewichtsteile der Bindemittelzusammensetzung, umfassend

        i) 25 bis 35 Gew.-%, bezogen auf die Bindemittelzusammensetzung, des mindestens einen silanterminierten Polyurethanpolymers **STP,** erhältlich aus dem mindestestens einen Polyol **P,** dem mindestens einen aliphatischen Polyisocyanat **I** und dem mindestens einen Organosilan **OS1** bevorzugt in Gegenwart des Katalysators **K,**
        ii) 4 bis 16 Gew.-%, bezogen auf die Bindemittelzusammensetzung, des mindestens einen Organosilans **OS2** und/oder Organotitanats **OT,**
        iii) 0.5 bis 1.5 Gew.-%, bezogen auf die Bindemittelzusammensetzung, des mindestens einen Trocknungsmittels,
        iv) 50 bis 70 Gew.-%, bezogen auf die Bindemittelzusammensetzung, des Lösungsmittels **L1;**

    b) zwischen 5 und 15 Gewichtsteile Industrieruss;
    c) zwischen 0.1 und 0.5 Gewichtsteile UV-Marker;
    d) soviel des Lösungsmittels **L2,** dass die Summe a) bis d) 100 Gewichtsteile ergibt.

11. Verfahren zur Verklebung oder zum Abdichten umfassend die Schritte

    i) Applikation einer Haftvermittlerzusammensetzung gemäss einem der Ansprüche 1 bis 10 auf ein zu verklebendes oder abzudichtendes Substrat **S1**
    ii) Applikation eines Klebstoffes oder Dichtstoffes auf die Zusammensetzung, welche sich auf dem Substrat **S1** befindet
    iii) Kontaktieren des Klebstoffs oder Dichtstoffes mit einem zweiten Substrat **S2;**

    oder

i') Applikation einer Haftvermittlerzusammensetzung gemäss einem der Ansprüche 1 bis 10 auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der Zusammensetzung, welche sich auf dem Substrat **S1** befindet;

oder

i") Applikation einer Haftvermittlerzusammensetzung gemäss einem der Ansprüche 1 bis 10 auf ein zu verklebendes oder abzudichtendes Substrat **S1**
ii") Applikation eines Klebstoffes oder Dichtstoffes zwischen die Oberflächen des Substrates **S1** und **S2,**

wobei das zweite Substrat **S2** aus demselben oder unterschiedlichem Material wie das Substrat **S1** besteht.

**12.** Verfahren gemäss Anspruch 11, **dadurch gekennzeichnet, dass** mindestens eines der Substrate **S1** und **S2** Glas, Metall oder Keramik umfasst.

**13.** Verfahren gemäss Anspruch 11 oder 12, **dadurch gekennzeichnet, dass** der Kleb- oder Dichtstoff ein Polyurethanklebstoff ist, welcher mindestens ein Isocyanatgruppen aufweisendes Polyurethanprepolymer enthält oder ein Klebstoff auf Basis silanfunktioneller Polymere ist.

**14.** Artikel zu dessen Herstellung ein Verfahren gemäss einem der Ansprüche 11 bis 13 durchgeführt wird.

**15.** Artikel nach Anspruch 14, **dadurch gekennzeichnet, dass** der Artikel ein Bauwerk, insbesondere ein Gebäude oder ein Teil davon, ein Industriegut oder ein Transportmittel, insbesondere ein Automobil, Bus, Lastkraftwagen, Schienenfahrzeug, Schiff oder ein Luftfahrzeug ist.

Europäisches Patentamt
European Patent Office
Office européen des brevets

# EUROPÄISCHER RECHERCHENBERICHT

Nummer der Anmeldung
EP 17 17 2551

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | US 2017/029676 A1 (MENNECKE KLAAS [DE]) 2. Februar 2017 (2017-02-02) * Beispiel 1 * ----- | 1-15 | INV. C08G18/75 C08G18/12 C08G18/28 C08G18/42 C08G18/44 |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 19. Oktober 2017 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 17 17 2551

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2017

| Im Recherchenbericht angeführtes Patentdokument | Datum der Veröffentlichung | Mitglied(er) der Patentfamilie | Datum der Veröffentlichung |
|---|---|---|---|
| US 2017029676 A1 | 02-02-2017 | EP 2930197 A1 | 14-10-2015 |
| | | EP 3129420 A1 | 15-02-2017 |
| | | US 2017029676 A1 | 02-02-2017 |
| | | WO 2015155355 A1 | 15-10-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0100632 A
- EP 09153120 A
- EP 2805985 A
- WO 2013174891 A
- WO 2013174892 A